(19) Europäisches Patentamt
European Patent Office
Office européen des brevets

(11) Publication number: **0 085 968**
**B1**

# (12) EUROPEAN PATENT SPECIFICATION

(45) Date of publication of patent specification: **02.01.86**

(51) Int. Cl.⁴: **C 08 K 3/34**, C 08 K 5/09, C 08 L 23/02

(21) Application number: **83101081.4**

(22) Date of filing: **04.02.83**

## (54) Nucleating agent for crystalline olefinic polymers.

(30) Priority: **08.02.82 IT 1949982**

(43) Date of publication of application:
**17.08.83 Bulletin 83/33**

(45) Publication of the grant of the patent:
**02.01.86 Bulletin 86/01**

(84) Designated Contracting States:
**BE DE FR GB NL**

(56) References cited:
**US-A-3 322 739**
**US-A-3 367 926**

(73) Proprietor: **MONTEFINA S.A.**
**Zoning Industriel**
**B-6520 Feluy (BE)**

(72) Inventor: **Caselli, Giancarlo**
**27, Via Matteo Maria Boiardo**
**Ferrara (IT)**
Inventor: **Gorini, Giuseppe**
**82, Corso Porta Po**
**Ferrara (IT)**

(74) Representative: **Weinhold, Peter, Dr. et al**
**Patentanwälte Dr. V. Schmied-Kowarzik Dipl.-Ing. G. Dannenberg Dr. P. Weinhold Dr. D. Gudel Dipl.-Ing. S. Schubert Dr. P. Barz**
**Siegfriedstrasse 8**
**D-8000 München 40 (DE)**

EP 0 085 968 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The spontaneous formation process of the crystalline nuclei in the crystalline polymers and copolymers of the alpha-olefins can be sensibly influenced by the presence of foreign matters of a different type and characterized by a high subdivision and dispersion of the solid particles in the polymeric matrix.

The presence of these substances, in suitable concentrations, results in a considerable increase in the number of crystallization nuclei, with consequent increase of the crystallization rate, without any modification of the relevant Avrami's law, which is generally fulfilled by isotactic polypropylene.

The increase in the crystallization kinetics is related with a plurality of factors, such as: number and sizes of the nucleating substance particles and chemical-physical characteristics thereof.

As the number of particles increases, the system tends to reach a saturation condition in which no further increase in the crystallization rate occurs as a function of the "nucleating agent" increment.

In the case of polypropylene, the final crystallinity of the nucleated polymer does not substantially differ from the one of the natural polymer; in fact, said final crystallinity prevailingly depends on stereoregularity, molecular weight as well as melting and solidification conditions.

The effect caused by the nucleating agents consists therefore in accelerating the crystallization kinetics, without affecting the polymer structural characteristics, with exception of the spherulites' dimension, which results to be remarkably reduced.

Main types of nucleating agents

The known nucleating agents can be divided, in relation to their possible utilizations and to their characteristics, into two basic classes.

1) Non-meltable nucleating agents

Among the products most generally used in the industrial practice there are known the salts of a few organic acids, which, when employed in the form of microparticles, exhibit a good consistency with the polymer thanks to the presence of the organic moiety in their molecule.

These substances, however, involve great difficulties as regards dispersion, which are due both to the methods employed for incorporating them into the polymeric matrix, and to the average size of their particles, to the particle-size distribution, to the physical form and purity.

All these factors concur to justify a certain inconstancy of their nucleating power.

The most commonly utilized products include the salts of alkaline metals, earth-alkaline metals and of aluminium, of the gluconic, succinic, adipic, benzoic, p-ter.butyl benzoic acids, etc.

The use of organic acid salts, generally endowed with a good nucleating power, does not always permit to obtain an excellent transparency of the manufactured articles.

This depends on the difficulty of obtaining the above-said products with particles of submicronic dimensions, as well as on the value of their refraction index, which is by far different from that of the polymeric substrate.

2) Meltable nucleating agents

To this class belongs a certain number of organic compounds characterized by a melting point which is lower than the polymer processing temperature, by a good consistency with the polymer and by the capability of crystallizing, in the form of microparticles, originating a very high number of homogeneously subdivided crystallization nuclei. A group of compounds which, due to the chemical nature and nucleating properties, appears particularly interesting, consists of a few organic acids selected from amongst the aliphatic polycarboxylic acids and the aromatic monocarboxylic acids. The use thereof, however, is substantially hindered by the corrosive power they impart to the polymer into which they are incorporated.

A further limitation is represented by the inconstancy, in terms of nucleating efficiency, caused by their interacting with catalytic residues and additives contained in variable amount in the polymer and in particular with the glyceryl monostearate employed as process coadjuvant.

Nucleating composition according to the invention

It has now been found, and this forms the object of the present invention, that it it possible to overcome the problems of dispersion, corrosiveness and inconstancy in the nucleation by employing a nucleating composition consisting of:

a) an organic acid selected from the aromatic monocarboxylic acids and the aliphatic polycarboxylic acids;

b) an inorganic compound acting as a neutralizing agent of the carboxylic acid and selected from the simple or mixed silicates of the metals belonging to Groups I and II of the Periodic System and relevant alumino silicates, characterized by a basic nature and a refractive index ranging from 1.45 to 1.65.

Non-limitative examples of the abovesaid compounds are:

— aliphatic polycarboxylic acids with preferably 2 or 3 carboxylic groups such as:
  - glutaric acid
  - succinic acid
  - adipic acid

  and aromatic monocarboxylic acids preferably those of the benzene or naphthalene series such as:
  - benzoic acid
  - toluic acid
  - p-tert.butyl-benzoic acid

— for the inorganic compounds:
sodium silicate
magnesium silicate
calcium silicate
sodium and calcium silicate
magnesium and calcium silicate
sodium and aluminium silicate

hydrated or anhydrous alumino silicates of Na, K, Ca, $NH_4$ comprising, in particular, the synthetic zeolites of general formula:

$$M_{x/n} \cdot (AlO_2)_x \cdot (SiO_2)_y \cdot zH_2O$$

wherein n=the valence of the alkaline or earth-alkaline element M.

The synthetic zeolites may be classified, depending on the value of the $SiO_2/Al_2O_3$ ratio, according to the scheme:

| $\frac{SiO_2}{Al_2O_3}$ | zeolite type |
|---|---|
| 2 | A |
| 2.4 | X |
| 4.8 | Y |
| 50 | ZSM |

Furthermore, the zeolites of type A, depending on the metal cation M, can be divided into:

| | Cation |
|---|---|
| Zeolite 3A | $K^+$ |
| Zeolite 4A | $Na^+$ |
| Zeolite 5A | $Ca^{++}$ |
| Zeolite $NH_4$ | $NH_4^+$ |

The concentration of the nucleating composition may range from 0.05 to 2.0% by weight and, preferably, from 0.1 to 0.6%, the weight ratio between inorganic compound and organic acid being possibly comprised between 0.5 and 10 and, preferably, between 2 and 6.

The nucleating systems forming the object of the present invention prove to be chemically inert with respect to the polymeric substrate, do not induce corrosiveness into the polymer and, besides, their effectiveness is not affected by the presence of catalyst residues or of additives, in particular of glyceryl monostearate.

The alkaline or earth-alkaline silicates and the corresponding alumino-silicates being part of the nucleating compositions of the present invention are non-toxic and are accepted by the Italian regulations as additives of polymers intended for coming into contact with food.

Also some inorganic acids included among the ones listed in the present patent have proved to be non-toxic, wherefore it is possible to form nucleating systems provided with toxicity-free properties.

The ingredients of the nucleating composition can be additioned to the polymer along with the components of the stabilization formula, by employing the conventional techniques adopted in the industrial practice.

The evaluation of the nucleating power of the compositions object of this invention is accomplished in terms of crystallization temperature (CT°C) measured by DSC (differential scanning calorimetry) techniques, and of optical characteristics (Haze) determined by method ASTM D-1003/A.

The higher the CT value, the higher the nucleation degree of the polymer.

Since the nucleation can raise the crystallization temperature by 20—25°C, it is apparent that a considerable advantage in terms of a higher cycle productivity is achieved in the injection molding processes.

The transparence of the manufactured articles results the higher, the lower the Haze values are.

The CT data are determined on die-cast platens having 1 mm thickness, produced from the granulated polymer.

The Haze data, conversely, are determined on die-injected platens, also 1 mm thick.

The tests indicated in the following examples have been carried out by using industrially produced isotactic polypropylene additioned with 0.05% of 2,6-di-tert.butyl-p.cresol as a process stabilizer, and with 0.05% of Irganox 1010, an antioxidant of the phenolic type consisting of tetramethylene - (4' - hydroxy - 3',5' - di - tert.butyl - phenyl propionate)methane.

The presence of other additives is specifically indicated in the relevant examples.

Examples 1—19

2-kg samples of powdered isotactic polypropylene (MIL=3.0) were homogenized in a centrifugal mixer with the stabilizers and the nucleating compositions based on organic acid and inorganic compound. The powders were successively fed to a single-screw extruder and granulated at a temperature of 230°C, molding by die-casting and die-injection the platens for the CT and Haze determinations.

The behaviour of the different nucleating systems is illustrated in the following Table 1.

TABLE 1

| Example No. | Organic acid (A) | Inorganic compound (B) Type | pH[1] | GMS[2] (% b.w.) | B/A (weight) | A+B (% b.w.) | CT (°C) | Haze (%) | Visual evaluation | Corrosiveness |
|---|---|---|---|---|---|---|---|---|---|---|
| 1 | — | — | — | 0,07 | — | — | 104 | 75 | opaque | middle |
| 2 | benzoic acid | — | — | — | — | 0,1 | 118 | 58 | little transparent | strong |
| 3 | " " | — | — | 0;07 | — | 0,1 | 110 | 70 | opaque | strong |
| 4 | " " | zeolite 4A | 10,8 | 0,07 | 3 | 0,4 | 118 | 60 | little transparent | none |
| 5 | p-tert.butyl benzoic acid | — | — | 0,07 | — | 0,2 | 117 | 98 | opaque | strong |
| 6 | " " | zeolite 4A | 10,8 | 0,07 | 1,5 | 0,5 | 124 | 44 | transparent | slight |
| 7 | succinic acid | — | — | 0,07 | — | 0,1 | 113 | 70 | opaque | strong |
| 8 | " " | zeolite 4A | 10,8 | 0,07 | 3 | 0,4 | 121 | 44 | transparent | none |
| 9 | " " | " 3A | 10,7 | 0,07 | 3 | 0,4 | 120,5 | 44 | transparent | none |
| 10 | " " | " " | 10,7 | 0,07 | 2 | 0,3 | 121 | 43 | transparent | slight |
| 11 | " " | " $NH_4$ | 9,6 | 0,07 | 3 | 0,4 | 121 | 43 | transparent | none |
| 12 | " " | " 5A | 10,0 | 0,07 | 3 | 0,4 | 120 | 43 | transparent | none |
| 13 | adipic acid | — | — | 0,07 | — | 0,1 | 115 | 65 | translucid | strong |
| 14 | " " | zeolite 4A | 10,8 | 0,07 | 3 | 0,4 | 123,5 | 35 | very transparent | none |
| 15 | " " | " " | 10,8 | 0,07 | 6 | 0,7 | 120 | 46 | transparent | none |
| 16 | " " | " 13X | 11,0 | 0,07 | 3 | 0,4 | 122 | 42 | transparent | none |
| 17 | " " | Na and Al silicate | 11,2 | 0,07 | 3 | 0,4 | 122,5 | 40 | transparent | none |
| 18 | " " | Na and Mg silicate | 9,8 | 0,07 | 3 | 0,4 | 123,5 | 36 | very transparent | none |
| 19 | " " | Na and Ca silicate | 10,1 | 0,07 | 3 | 0,4 | 124 | 35 | very transparent | none |

(1) The pH value was measured in the aqueous dispersion of the product at a concentration of 1% by weight, at 20°C.
(2) GMS=glyceryl monostearate.

**Claims**

1. Nucleating agent for crystalline polymers and copolymers and alpha-olefins, consisting of the combination of:

a) an aromatic monocarboxylic acid or an aliphatic polycarboxylic acid,

b) a silicate or an alumino-silicate of metals of the 1st or 2nd Group of the periodic system, suited to neutralize the carboxylic acid and having a refractive index of from 1.45 to 1.65,

in which combination the weight ratio of component *b* to component *a* ranges from 0.5 to 10, the nucleating agent being used in amounts equal to 0.05% and up to 2% by weight referred to the polymer.

2. The nucleating agent according to claim 1, wherein component *b* consists of a zeolite.

3. The nucleating agent according to any of the preceding claims, wherein the weight ratio between component *b* and component *a* ranges from 2 to 6.

4. The nucleating agent according to any of the preceding claims, employed in amounts corresponding to 0.1% and up to 0.6% by weight referred to the polymer.

**Patentansprüche**

1. Nukleationsmittel für kristalline Polymere und Copolymere von α-Olefinen, das aus einer Kombination aus:

a) einer aromatischen Monocarbonsäure oder einer aliphatischen Polycarbonsäure,

b) einem Silicat oder einem Aluminosilicat von Metallen der ersten oder zweiten Gruppe des Periodensystems, das zum Neutralisieren der Carbonsäure geeignet ist und einen Brechungsindex von 1,45 bis 1,65 hat,

besteht, in welcher das Gewichtsverhältnis der Komponente b) zu Komponente a) von 0,5 bis 10 beträgt und das Nukleationsmittel in Mengen von 0,05 und bis zu 2 Gew.-%, bezogen auf das Polymere, verwendet wird.

2. Nukleationsmittel nach Anspruch 1, in welchem die Komponente b) aus einem Zeolith besteht.

3. Nukleationsmittel nach einen der vorhergehenden Ansprüche, in welchem das Gewichtsverhältnis zwischen Komponente b) und Komponente a) von 2 bis 6 beträgt.

4. Nukleationsmittel nach einem der vorhergehenden Ansprüche, verwendet in Mengen entsprechend 0,1 und bis zu 0,6 Gew.-%, bezogen auf das Polymere.

**Revendications**

1. Agent de nucléation pour polymères et copolymères d'alpha-oléfines critsallins, consistant en la combinaison de:

a) un acide monocarboxylique aromatique ou un acide polycarboxylique aliphatique;

(b) un silicate ou un alumino-silicate de métaux du groupe I ou II de la classification périodique des éléments, permettent la neutralisation de l'acide carboxylique et présentant un indice de réfraction compris entre 1,45 et 1,65;

combinaison dans laquelle le rapport pondéral composant *b*/composant *a* est compris entre 0,5 et 10, l'agent de nucléation étant employé en des proportions comprises entre 0,05% et 2% en poids exprimés par rapport au poids du polymère.

2. L'agent de nucléation selon la revendication 1, dans lequel le composant *b* consiste en une zéolite.

3. L'agent de nucléation selon une quelconque des revendications précédentes dans lequel le rapport pondéral composant *b*/composant *a* est compris entre 2 et 6.

4. L'agent de nucléation selon une quelconque des revendications précédentes, employé en proportion correspondant à 0,1 à 0,6% en poids par référence au polymère.